# EUROPEAN PATENT APPLICATION

(11) **EP 3 276 562 A1**
(43) Date of publication of application: **31.01.2018**
(21) Application number: 16768386.1
(22) Date of filing: 07.03.2016
(51) Int. Cl.: G06Q 30/02

(54) **USER INTEREST ESTIMATION SYSTEM AND INFORMATION DELIVERY SYSTEM**

(30) Priority: 24.03.2015 JP 2015060389
(71) Applicant: Kyoto University, Kyoto-shi, Kyoto 606-8501 (JP)
(72) Inventor: SHINKUMA Ryoichi, Kyoto-shi Kyoto 606-8501 (JP)
(74) Representative: Viering, Jentschura & Partner mbB Patent- und Rechtsanwälte
(86) International application number: PCT/JP2016/057010
(87) International publication number: WO 2016/152483

(57) **Abstract**

The purpose of the present invention is to provide a user interest estimation system and an information delivery system capable of accurately estimating user's interest and eventually capable of delivering specific information such as advertisements while corresponding to the user. After having received photographic data related to a commodity or service transmitted via a network from a user's information terminal device 1, geographical or spatial context information related to a time and location included in the photographic data is acquired by referring to a context information database, object information pertaining to the commodity or service related to the time and location included in photographic data is obtained by referring to an object information database, and a user interest information is generated by associating the context information and the object information with each other.

## Description

### Technical Field

The present invention relates to a user interest estimation system that estimates user's interest based on photographic data of a commodity or service photographed by an information terminal device of a user, and also relates to an information delivery system used in connection with the user interest estimation system.

### Background Art

In recent years, with the development and spread of the Internet and communication devices, many users possess information terminal devices such as mobile phones, smart phones, and tablet terminals, and in various places, a commodity or service is photographed by an information terminal device.

Since the commodity or service photographed by the information terminal device of a user is often of interest to the user, many image analysis techniques for identifying the commodity or service based on the photographic data are also disclosed (For example, see Patent Documents 1 to 6).

In particular, recently, in the photographic data photographed by a user's information terminal device, in addition to the temporal information, the location information has also become to be recorded using a GPS function, etc. Further, in some cases, when analyzing images, the temporal or location information is also used.

In this way, if it is possible to estimate individual user's interest by identifying the commodity or service that the user photographed with the information terminal device, it is considered to be useful for information delivery such as advertisements, etc., to the user's information terminal device.

### Prior Art Document

### Patent Document

Patent Document 1: Japanese Unexamined Patent Application Publication No. 2015-7884
Patent Document 2: Japanese Unexamined Patent Application Publication No. 2011-525002
Patent Document 3: Japanese Unexamined Patent Application Publication No. 2010-286960
Patent Document 4: Japanese Unexamined Patent Application Publication No. 2010-44580
Patent Document 5: Japanese Unexamined Patent Application Publication No. 2008-244660
Patent Document 6: Japanese Unexamined Patent Application Publication No. 2006-209492

### SUMMARY OF THE INVENTION

### Problems to be Solved by the Invention

However, conventionally, the commodity or service itself photographed by the user is only specified by the image analysis technology, and since the other environments surrounding the user have not been considered at all. Therefore, it is difficult to accurately estimate the user's interest, and therefore there was a problem that it was not possible to efficiently deliver specific information such as advertisements while corresponding to each user.

The present invention was made in view of the aforementioned problems, and aims to provide a user interest estimation system and an information delivery system capable of accurately estimating user's interest and eventually capable of delivering specific information such as advertisements while corresponding to the user.

### Means for Solving the Problems

In order to attain the aforementioned objects, the present invention provides a user interest estimation system that estimates user's interest based on photographic data of a commodity or service photographed by an information terminal device of a user. The user interest estimation system includes: an estimation device configured to estimate the user's interest; a context information database connected to the estimation device in a communicable state and configured to store geographical or spatial context information associated with a time and/or location; an object information database connected to the estimation device in a communicable state and configured to store object information related to a commodity or service associated with a time and/or location; and an interest information database connected to the estimation device in a communicable state and configured to store interest information of the user. The estimation device includes a photographic data reception unit configured to receive photographic data related to a commodity or service transmitted from the information terminal device of the user via a network, a context information acquisition unit configured to acquire geographical or spatial context information pertaining to a time and/or location included in the photographic data received by the photographic data reception unit by referring to the context information database, an object information acquisition unit configured to acquire object information related to a commodity or service pertaining to a time and/or location included in the photographic data received by the photographic data reception unit by referring to the object information database, and an interest information generation unit configured to generate the interest information of the user by correlating the context information acquired by the context information acquisition unit and the object information acquired by the object information acquisition unit.

The context information database may comprise a plurality of databases including at least one of a map database, a meteorological database, and a traffic database.

The object information database may comprise a plurality of databases including at least one of an event database, a news database, a store database, and a facility database.

The interest information generation unit may make photographic data received by the photographic data reception unit include interest information in association with the context information and the object information.

The user interest estimation system may further comprise a person image judgment unit configured to judge whether or not the photographic data photographed by the information terminal device of the user mainly include person related images, wherein the context information acquisition unit and the object information acquisition unit do not acquire the context information and the object information when it is determined by the person image judgment unit that the photographic data mainly include the person related images.

An information delivery system according to the present invention is an information delivery system equipped with an interest information database in the user interest estimation system as recited in any one of claims 1 to 5 and an information delivery device connected to the interest information database in a communicable state. The information delivery device includes an information reception unit configured to receive specific information such as advertisements from a predetermined server device, a second context information acquisition unit configured to acquire geographical or spatial context information from the specific information received by the information reception unit, a second object information acquisition unit configured to acquire object information related to a commodity or service from the specific information received by the information reception unit, a user selection unit configured to select a user having interest information which entirely or partially coincides with the context information acquired by the second context information acquisition unit and the object information acquired by the second object information acquisition unit by referring to the interest information database, and an information delivery unit configured to deliver specific information received by the information reception unit to the information terminal device of the user selected by the user selection unit.

The information delivery unit may deliver specific information in a state in which interest information of the user referred to when the user selection unit selects the user is associated.

The objective optical system may further comprise a third context information acquisition unit connected to the information terminal device of the user in a communicable state via a network, wherein the third context information acquisition unit acquires geographical or spatial context information pertaining to a current time and location in the information terminal device of the user by referring to the context information database, and wherein the information terminal device of the user preferentially displays specific information in which the interest information of the user is entirely or partially associated with the context information acquired by the third context information acquisition unit when there are plural pieces of specific information transmitted from the information delivery device.

When there are plural pieces of specific information transmitted from the information delivery device, the information terminal device of the user may preferentially display specific information associated with more interest information of the user.

### Effects of the Invention

According to the present invention, every time the user photographs a commodity or service, the object information related to the commodity or service with interest by the user is accumulated in the interest information database in the state in which the object information is associated with specific geographical or spatial information surrounding the user. Therefore, by referring to the interest information database, it is possible to accurately estimate each user's interest and eventually it is possible to deliver specific information such as advertisements while corresponding to each user.

### BRIEF DESCRIPTION OF THE DRAWINGS

FIG. 1 is a diagram showing an overall configuration of a user interest estimation system.
FIG. 2 is a diagram showing a configuration of an estimation device.
FIG. 3 is a diagram showing a configuration of an estimation device according to another embodiment.
FIG. 4 is a flowchart showing the operation of the user interest estimation system.
FIG. 5 is a diagram showing an overall configuration of an information delivery system.
FIG. 6 is a diagram showing a configuration of an information delivery device.
FIG. 7 is a diagram showing a configuration of an information delivery device according to another embodiment.
FIG. 8 is a flowchart showing the operation of the information delivery system.

### EMBODIMENTS FOR CARRYING OUT THE INVENTION

### <First Embodiment>

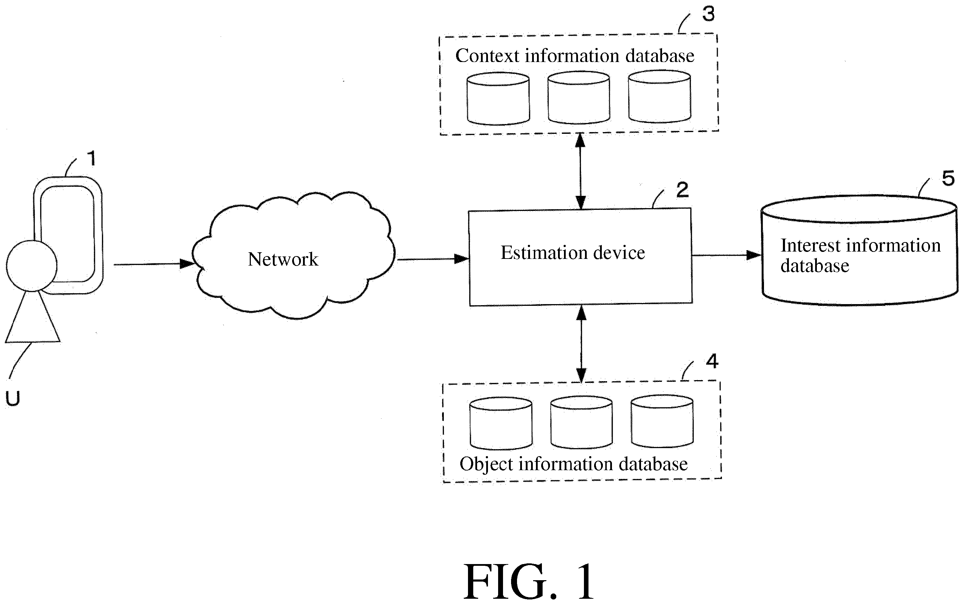

Next, an embodiment of a user interest estimation system according to the present invention will be described with reference to FIGs. 1 to 4.

### [Overall Configuration]

FIG. 1 is a diagram showing an overall configuration of a user interest estimation system.

The user interest estimation system includes an information terminal device 1 of a user U, an estimation device 2 configured to estimate the interest of the user U, a context information database 3 configured to store context information, an object information database 4 configured to store object information, and an interest information database 5 configured to store interest information of the user U.

The information terminal device 1 of the user U and the estimation device 2 are connected in a communicable state via a network such as the Internet. Also, the estimation device 2 and each of the databases 3, 4, and 5 are connected directly or via a network in a communicable state.

The information terminal device 1 of the user U can be exemplified by a cellular phone, a smartphone, a tablet terminal, a navigation device, a PC terminal, a wearable terminal of a wristwatch type, a wristband type, an eyeglass type, and the like. The information terminal device 1 of the user U has a photographing function such as a camera for photographing information related to a commodity or service, and acquires information related to time through the built-in clock function or a network and information related to the location of the information terminal device 1 by the built-in GPS function or the like.

When a commodity or service is photographed with a still image or movie by the photographing function, the information terminal device 1 of the user U acquires the information related to the photographed time and location by using the built-in clock function or the GPS function described above, and stores the photographic data together with the information related to the photographed time and location in the built-in storage unit. The photographic data related to the commodity or service is sent to the estimation device 2 via a network in a state in which the photographic data includes the information related to the photographed time and location.

Note that the commodity or service refers to all objects that can be photographed by the information terminal device 1 of the user U regardless of whether or not compensation is received.

Also note that the information related to time refers to information composed of one or more combinations of year, season, month, day, hour, minute, second, and the like.

Also note that the information related to a location is not limited to the information related to administrative districts such as countries, prefectural or city governments, municipalities, and the like, but may be information related to a building name, a room number, a specific location in a room, or the like. Especially administrative districts, building names and the like can be obtained by the aforementioned GPS function, but it is conceivable to acquire a room number, a specific location in a room, etc., by other devices or sensors.

Further, each function of the information terminal device 1 of the user U functions by executing a computer program installed in the internal storage device. The computer program may be provided in the information terminal device 1 in advance, or may be downloaded from a certain server or a storage medium.

The estimation device 2 is configured to estimate the interest of the user U based on the photographic data of a commodity or service photographed by the information terminal device 1 of the user U. The specific configuration and operation of this estimation device 2 will be described later.

The context information database 3 stores geographical or spatial context information associated with time and location. In this embodiment, the context information database 3 is composed of plural kinds of context information databases. For example, the context information may be exemplified by place name information and address information (map database) associated with a time and/or location, season information, weather information, sunshine amount information, rainfall information, temperature information, humidity information or wind speed information (meteorological database) associated with a time and/or location, road information and accident information (traffic database) associated with a time and/or location, and the like.

The object information database 4 is configured to store object information related a commodity or service and associated with a time and/or location. In this embodiment, the object information database 4 is composed of plural kinds of object databases. For example, the object information can be exemplified by event information (event database) associated with a time and/or location, news information (news database) associated with a time and/or location, a store information (store database) associated with a time and/or location, a facility information (facility database) associated with a time and/or location, etc.

### [Configuration of Estimation Device 2]

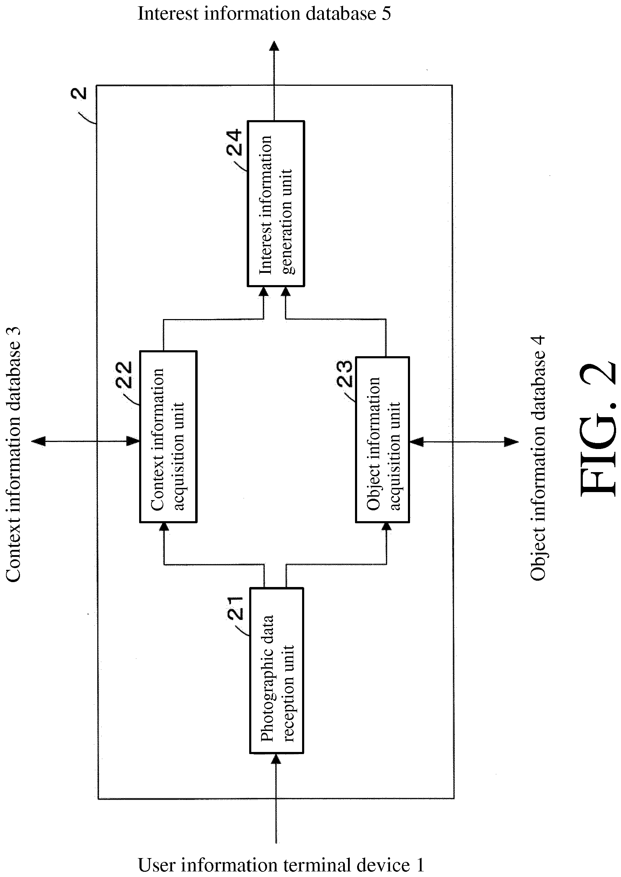

As shown in FIG. 2, the estimation device 2 is provided with a photographic data reception unit 21, a context information acquisition unit 22 provided on one output side of the photographic data reception unit 21, an object information acquisition unit 23 provided on the other output side of the photographic data reception unit 21, an interest information generation unit 24 provided on the output side of the context information acquisition unit 22 and the object information acquisition unit 23.

The photographic data reception unit 21 receives photographic data of a commodity or service from the information terminal device 1 of the user U via the network. The photographic data of the commodity or service contains information related to the photographed time and location by the information terminal device 1 of the user U.

The context information acquisition unit 22 acquires the geographical or spatial context information pertaining to the time and/or location included in the photographic data received by the photographic data reception unit 21 by referring to the context information database 3. The acquisition of context information by the context information acquisition unit 22 will be described in the later-described example.

The object information acquisition unit 23 acquires object information related to a commodity or service pertaining to a time and/or location included in photographic data received by the photographic data reception unit 21 by referring to the object information database 4. At this time, the object information acquisition unit 23 may increase the accuracy of acquisition of object information by using image analysis techniques of the photographic data. The acquisition of the object information by the object information acquisition unit 23 will be described in the later-described example.

The interest information generation unit 24 generates interest information of the user U by associating the context information acquired by the context information acquisition unit 22 with the object information acquired by the object information acquisition unit 23, and then stores the interest information in the interest information database 5. At this time, the interest information generation unit 24 may make the photographic data received by the photographic data reception unit 21 include interest information in association with the context information and the object information. The generation of the interest information by the interest information generation unit 24 will be described in the later-described example.

### [Operation of User Interest Estimation System]

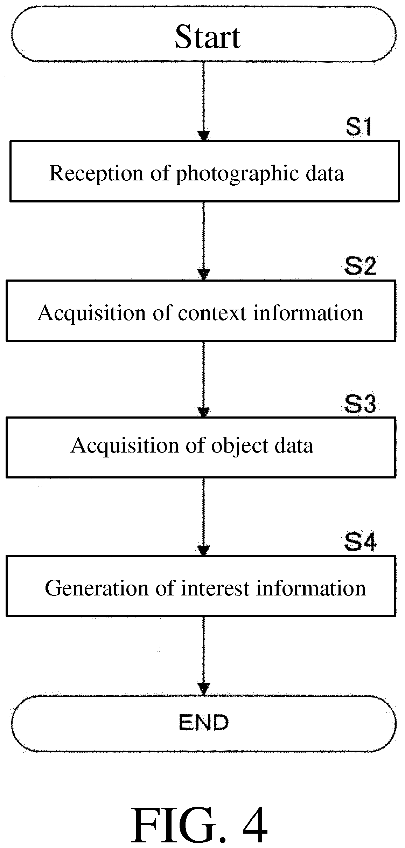

Next, the operation of the user interest estimation system will be described with reference to the flowchart shown in FIG. 4. In the following description, "STEP (step)" will be abbreviated as "S".

It is assumed that the information terminal device 1 of the user U photographed a commodity or service with a still image or movie by the photographing function, acquired the information related to the photographed time and location by using the built-in clock function and/or the GPS function described above, and stores the photographic data together with the information related to the photographed time and location in the built-in storage unit.

Initially, the photographic data reception unit 21 receives photograph data of a commodity or service from the information terminal device 1 of the user U via the network (S1). In receiving the photographic data by this photographic data reception unit 21, the photographic data may be transmitted automatically from the information terminal device 1 of the user U or may be transmitted by the operation of the user U.

Next, the context information acquisition unit 22 acquires the geographical or spatial context information pertaining to the time and/or location included in the photographic data received by the photographic data reception unit 21 by referring to the context information database 3 (S2).

On the other hand, the object information acquisition unit 23 acquires the object information related to a commodity or service pertaining to a time and/or location included in the photographic data received by the photographic data reception unit 21 by referring to the object information database 4 (S3). When acquiring the object information by the object information acquisition unit 23, the context information acquired by the context information acquisition unit 22 may be used.

Next, the interest information generation unit 24 generates interest information of the user U by associating the context information acquired by the context information acquisition unit 22 with the object information acquired by the object information acquisition unit 23, and then stores the interest information in the interest information database 5 (S4).

With this, every time the user U photographs a commodity or service, the object information related to the commodity or service with interest by the user is accumulated in the interest information database 5 in the state in which the object information is associated with geographical or spatial context information surrounding the user U. Therefore, by referring to the interest information database 5, the interest of each user U can be accurately estimated.

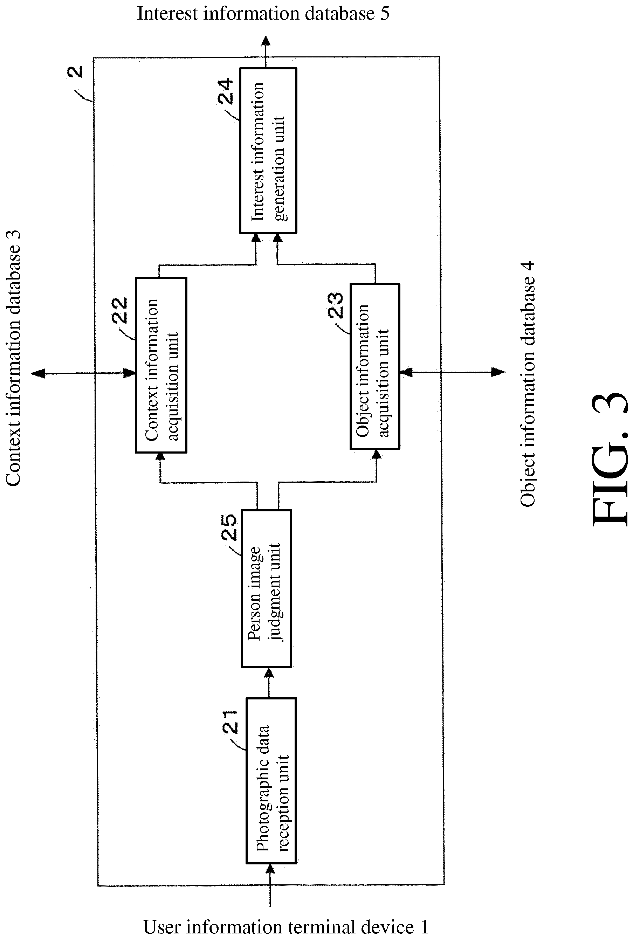

In this embodiment, the context information and the object information are acquired as they are from the photographic data of the commodity or the service. However, when the photographic data mainly includes person related images, it may be configured to not acquire the context information and the object information. For example, as shown in FIG. 3, a person image judgment unit 25 is provided on the output side of the photographic data reception unit, so that the person image judgment unit 25 determines whether or not the photographic data photographed by the information terminal device 1 of the user U mainly includes person related images. When the person image judgment unit 25 determines that the photographic data mainly includes person related images, the context information acquisition unit 22 and the object information acquisition unit 23 do not acquire context information and object information.

### <Second Embodiment>

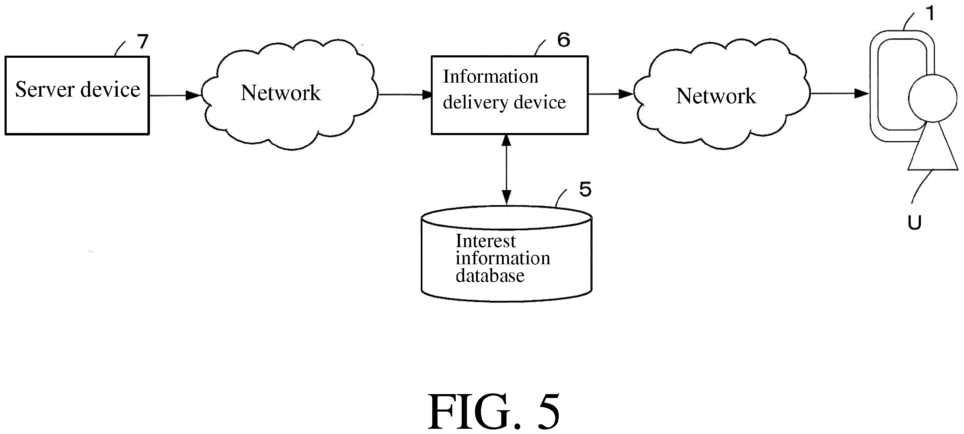

Next, an embodiment of an information delivery system according to the present invention will be described with reference to FIGs. 5 to 8. In the following description, only configurations different from those in the aforementioned embodiment will be described, and the same reference numerals will be allotted to the same configurations and explanations will be omitted.

### [Overall Configuration]

FIG. 5 is a diagram showing the overall configuration of the information delivery system.

This information delivery system includes an information terminal device 1 of a user U, an information delivery device 6 for delivering specific information such as advertisements to the information terminal device 1 of the user U, a server device 7 for sending specific information to the information delivery device 6, and an interest information database 5 that stores the interest information of the user U.

The information terminal device 1 of the user U, the server device 7, and information delivery device 6 are connected in a communicable state via a network such as the Internet. Further, the information delivery device 6 and the interest information database 5 are connected directly or via a network in a communicable state.

### [Configuration of Information Delivery Device 6]

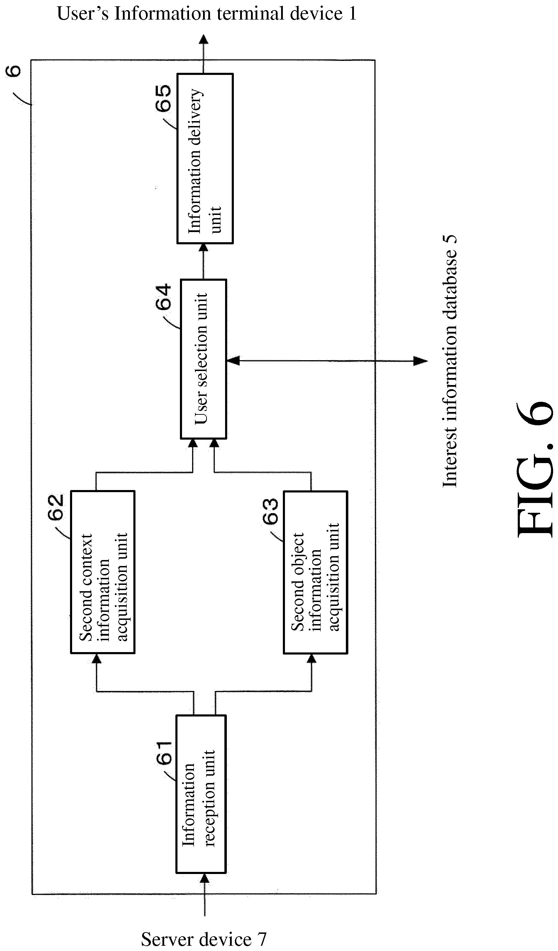

As shown in FIG. 6, the information delivery device 6 is equipped with an information reception unit 61, a second context information acquisition unit 62 provided on one output side of the information reception unit 61, a second object information acquisition unit 63 similarly provided on the other output side of the information reception unit 61, a user selection unit 64 provided on the output side of the second context information acquisition unit 62 and the second object information acquisition unit 63, and an information delivery unit 65 provided on the output side of the user selection unit 64.

The information reception unit 61 receives specific information such as advertisements transmitted from a predetermined server device 7 via the network. The specific information such as advertisements, etc., widely includes information related to a commodity and service, and includes various information useful for a user U regardless of whether or not compensation is received.

The second context information acquisition unit 62 acquires geographical or spatial context information from the specific information received by the information reception unit 61. The acquisition of the context information by the second context information acquisition unit 62 will be described in detail in the later-described example.

The second object information acquisition unit 63 acquires object information related to a commodity or service from the specific information received by the information reception unit 61. The acquisition of the object information by the second object information acquisition unit 63 will be described in detail in the later-described example.

The user selection unit 64 selects a user U having interest information which entirely or partially coincides with the context information acquired by the second context information acquisition unit 62 and the object information acquired by the second object information acquisition unit 63 by referring to the interest information database. The selection of the user U by the user selection unit 64 will be described in detail in the later-described example.

The information delivery unit 65 delivers the specific information received by the information reception unit 61 to the information terminal device 1 of the user U selected by the user selection unit 64 via the network. This information delivery unit 65 may deliver only the specific information or may deliver the specific information in a state in which the interest information of the user U referred to when the user selection unit 64 selects the user U is included.

### [Operation of Information Delivery System]

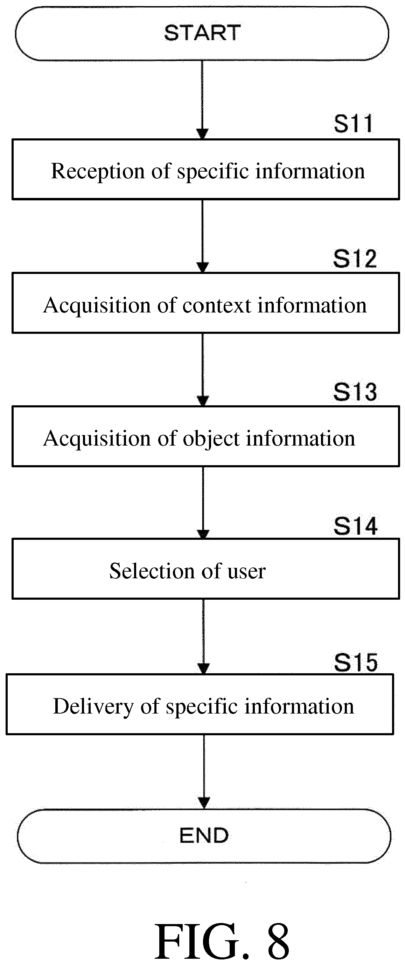

Next, the operation of the user interest estimation system will be described with reference to the flowchart shown in FIG. 8. In the following description, "STEP (step)" will be abbreviated as "S".

Initially, the information reception unit 61 receives specific information such as advertisements transmitted from a predetermined server device 7 via the network (S11). As to the reception of the specific information by this information reception unit 61, photographic data may be automatically transmitted from a predetermined server device 7 or may be transmitted in response to a request from the information delivery device 6.

Next, the second context information acquisition unit 62 acquires geographical or spatial context information from the specific information received by the information reception unit 61 (S12).

On the other hand, the second object information acquisition unit 63 acquires object information related to a commodity or service from the specific information received by the information reception unit 61 (S13).

Next, the user selection unit 64 selects a user U having interest information which entirely or partially coincides with the context information acquired by the second context information acquisition unit 62 and the object information acquired by the second object information acquisition unit 63 by referring to the interest information database (S14).

Next, the information delivery unit 65 delivers the specific information received by the information reception unit 61 to the information terminal device 1 of the user U selected by the user selection unit 64 via the network (S15). When delivering the specific information by means of this information delivery unit 65, it may be delivered each time the information reception unit 61 receives the specific information, or may be delivered at an appropriate time in consideration of the time and location included in the specific information.

As a result, the information terminal device 1 of the user U can be used for user's browsing by displaying the specific information delivered from the information delivery device 6.

In this embodiment, the information terminal device 1 of the user U displays all of the plurality of specific information delivered from the information terminal device 1. However, certain specific information may be preferentially displayed among plural pieces of specific information.

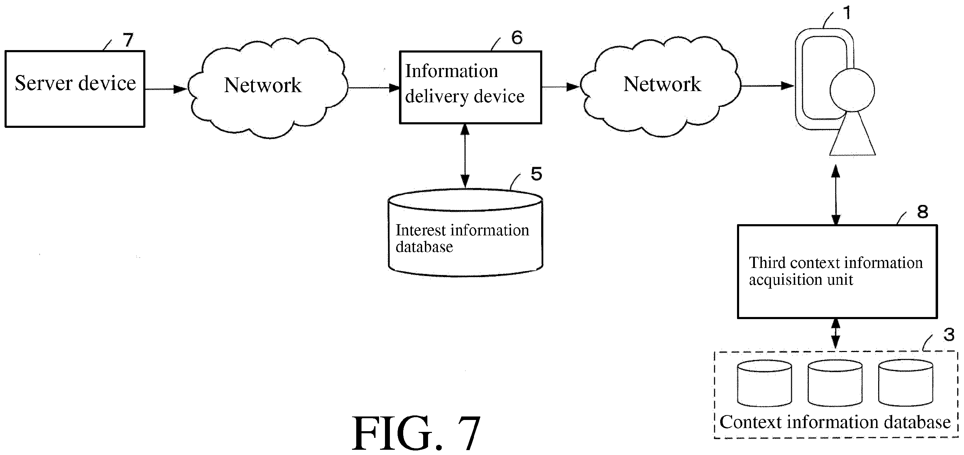

For example, as shown in FIG. 7, a third context information acquisition unit 8 connected to the information terminal device 1 of the user U in a communicable state via the network is provided. This third context information acquisition unit 8 acquires geographical or spatial context information pertaining to a current time and location in the information terminal device 1 of the user U by referring to the context information database 3. When there are plural pieces of specific information transmitted from the information delivery device 6, the information terminal device 1 of the user U preferentially displays the specific information in which the interest information of the user U entirely or partially coincides with the context information acquired by the third context information acquisition unit 8. Alternatively, when there are plural of pieces of specific information transmitted from the information delivery device 6, the information terminal device 1 of the user U may preferentially display specific information associated with more user's interest information. In these cases, it is preferable that this information delivery unit 65 of the information delivery unit 6 deliver only specific information in a state in which the interest information of the user U referred to when the user selection unit 64 selects the user U is included.

### Examples

Next, examples of a user interest estimation system and an information delivery system according to the present invention will be described.

### [Example 1]

In this example, based on the photographic data of services "Summer Festival" and "Cafe" photographed by the information terminal device 1 of the user U1, it is estimated that the user U1 has strong interest in services "Summer Festival" and "cafe", and the specific information related to services "Summer Festival" and "Cafe" is delivered to the information terminal device 1 of the user U1. Hereinafter, the detail description will be made.

### <Generation of Interest Information of Service "Summer Festival">

First, the information terminal device 1 of the user U1 acquires, when service "Summer Festival" is photographed by its photographing function, information A related to the following photographed time and location using the built-in clock function and/or GPS function, and stores the photographic data of the service "Summer Festival" in which the information A related to the following photographed time and location is included. The photographic data related to this service "Summer Festival" is transmitted to the estimation device 2 via the network in a state in which the photographic data includes information A related to the following photographed time and location.

### (Information A related to Time and Location)

- Time: July 17, 2014 6:30:00 pm
- Location: 35° 0 min xx sec, longitude 135° 45 min yy sec

Next, in the estimation device 2, the photographic data reception unit 21 receives the photographic data of the service "Summer Festival" from the information terminal device 1 of the user U1 via the network. The photographic data of this service "Summer Festival" contains information A related to the aforementioned photographed time and location.

Then, by referring to the context information database 3 (map database and meteorological database), the context information acquisition unit 22 acquires the following geographical or spatial context information A pertaining to the information A related to the aforementioned time and location included in the photographic data of the service "Summer Festival" received by the photographic data reception unit 21.

### (Context Information A)

- Place Name: Shijo Karasuma
- Address: Shijo Karasuma OO, Shimogyo-ku, Kyoto-shi
- Season: Summer
- Weather: Sunny
- Temperature: 30°C
- Humidity: 80%

The object information acquisition unit 23 acquires object information A related to the following "Summer Festival" pertaining to the time and location included in the photographic data of the service "Summer Festival" received by the photographic data reception unit 21 by referring to the object information database 4 (event database).

### (Object Information A)

- Summer Festival (conducted at 5 pm - 10 pm on July 17, 2014, at Shijo-dori Karasuma OO, Shimogyo-ku, Kyoto-shi)

Then, the interest information generation unit 24 correlates the aforementioned context information A acquired by the context information acquisition unit 22 with the aforementioned object information A obtained by the object information acquisition unit 23 and generates the interest information A of the following user U1 in a data format, and then stores it in the interest information database 5.

### (Interest Information A)

Time: 20140717183000, User U1 ID: 0001, Place Name: Shijo Karasuma, Address: Shijo Karasuma OO, Shijo karasuma-dori, Shimogyo-ku, Kyoto-shi, Season: Summer, Weather: Sunny, Temperature: 30°C, Humidity: 80%, Service: Summer Festival

### <Generation of Interest Information of Service "Cafe">

First, the information terminal device 1 of the user U1 acquires, when service "Cafe" is photographed by its photographing function, the information B related to the following photographed time and location using the built-in clock function and GPS function, and stores the photographic data of the service "Cafe" in which the information B related to the following photographed time and location is included. The photographic data related to this service "Cafe" is transmitted to the estimation device 2 via the network in a state in which the photographic data includes the information B related to the following photographed time and location.

### (Information B related to Time and Location)

- Time: October 3, 2014 6:30:00 pm
- Location: 35° 0 min xx sec, longitude 135° 45 min yy sec

Next, in the estimation device 2, the photographic data reception unit 21 receives the photographic data of the service "Cafe" from the information terminal device 1 of the user U1 via the network. The photographic data of this service "Cafe" includes the information B related to the aforementioned photographed time and location.

The context information acquisition unit 22 acquires the following geographical or spatial context information B pertaining to the information B related to the aforementioned time and location included in the photographic data of the service "Cafe" received by the photographic data reception unit 21 by referring to the context information database 3 (map database and meteorological database).

### (Context Information B)

- Place Name: Shijo Karasuma
- Address: Shijo Karasuma OO, Shimogyo-ku, Kyoto-shi
- Season: Autumn
- Weather: Rain
- Temperature: 20°C
- Humidity: 70%

The object information acquisition unit 23 acquires object information B related to the following service "Cafe" pertaining to the time and location included in the photographic data of the service "Cafe" received by the photographic data reception unit 21 by referring to the object information database 4 (event database).

### (Object Information B)

- Cafe (Business Hours Weekdays 11 am - 8 pm, Shijo-dori Karasuma OO, Shimogyo-ku, Kyoto-shi)

Then, the interest information generation unit 24 correlates the aforementioned context information B acquired by the context information acquisition unit 22 with the aforementioned object information B obtained by the object information acquisition unit 23 and generates the interest information B of the following user U1 in a data format, and then stores it in the interest information database 5.

### (Interest Information B)

- Time: 20141003183000, User U1 ID: 0001, Place Name: Shijo Karasuma, Address: Shijo-dori Karasuma OO, Shimogyo-ku, Kyoto-shi, Season: Autumn, Weather: Rain, Temperature: 20°C, Humidity: 70%, Service: Cafe

### <Delivery of specific information related to Service "Summer Festival">

Next, in the information delivery device 6, the information reception unit 61 receives specific information related to the service "Summer Festival" transmitted from the predetermined server device 7 via the network.

Then, the second context information acquisition unit 62 acquires the following geographical or spatial context information A' from the specific information related to the service "Summer Festival" received by the information reception unit 61.

### (Context Information A')

- Place Name: Shijo Karasuma
- Address: Shijo-dori Karasuma OO, Shimogyo-ku, Kyoto-shi

The second object information acquisition unit 63 acquires the following object information A' related to the service "Summer Festival" from the specific information related to the service "Summer Festival" received by the information reception unit 61.

### (Object Information A')

- Summer festival

The user selection unit 64 selects the aforementioned user U1 having the interest information A which entirely or partially coincides with the context information A' acquired by the second context information acquisition unit 62 and the object information A' acquired by the second object information acquisition unit 63 by referring to the interest information database.

The information delivery unit 65 delivers the specific information related to the service "Summer Festival" received by the information reception unit 61 to the information terminal device 1 of the user U1 selected by the user selection unit 64 via the network. At this time, it is preferable that the information delivery unit 65 deliver the specific information in a state in which the interest information A of the user U1 referred to when the user selection unit 64 selects the user Us is associated.

### < Delivery of Specific Information related to Service "Cafe">

Next, in the information delivery device 6, the information reception unit 61 receives specific information related to the service "Cafe" transmitted from the predetermined server device 7 via the network.

Next, the second context information acquisition unit 62 acquires the following geographical or spatial context information B' from the specific information related to the service "Cafe" received by the information reception unit 61.

### (Context Information B')

- Place Name: Shijo Karasuma
- Address: Shijo-dori Karasuma OO, Shimogyo-ku, Kyoto-shi

Further, the second object information acquisition unit 63 acquires the following object information B' related to service from the specific information related to the service "Cafe" received by the information reception unit 61.

### (Object Information B')

- Cafe

The user selection unit 64 selects the aforementioned user U1 having the information B which entirely or partially coincides with the context information B' acquired by the second context information acquisition unit 62 and the object information B' acquired by the second object information acquisition unit 63 by referring to the interest information database.

The information delivery unit 65 delivers the specific information related to the service "Cafe" received by the information reception unit 61 to the information terminal device 1 of the user U1 selected by the user selection unit 64 via the network. At this time, it is preferable that the information delivery unit 65 deliver the specific information in a state in which the interest information B of the user U1 referred to when the user selection unit 64 selects the user U1 is associated.

In this example, the specific information related to the service "Summer festival" and the service "Cafe" is separately delivered to the information terminal device 1 of the user U, but it may be delivered at the same time.

In this example, the information terminal device 1 of the user U displays all of the plural pieces of specific information delivered from the information terminal device 1. However, certain specific information may be preferentially displayed among plural pieces of the specific information.

For example, as shown in Fig. 7, the third context information acquisition unit 8 acquires geographical or spatial context information pertaining to the current time and location in the information terminal device 1 of the user U by referring to the context information database 3. Then, when the specific information transmitted from the information delivery device 6 is two services "Summer Festival" and "Cafe" and the context information acquired by the third context information acquisition unit 8 is "Shijo Karasuma, Season: Summer, Weather: Sunny", the information terminal device 1 of the user U preferentially displays the specific information related to the service "Summer Festival" associated with the interest information A of the user U1 which partly coincides with the context information. On the other hand, when the context information is "Shijo Karasuma, Season: Autumn, Weather: Rain", the information terminal device 1 of the user U1 preferentially displays the specific information related to the service "Cafe" with which the related information B of the user U1 which partially coincides with the context information is associated.

### [Example 2]

In this example, based on the photographic data of the commodities "ice cream" and "book" photographed by the information terminal device 1 of a user U2, it is estimated that the user U2 is strongly interested in commodities "ice cream" and "book", specific information related to commodities "ice cream" and "book" is delivered to the information terminal device 1 of the user U2. Hereinafter, the specific description will be made.

### <Generation of Interest Information of Commodity "ice cream">

First, the information terminal device 1 of the user U2 acquires, when a commodity "ice" is photographed by its photographing function, the information C related to the following photographed time and location using the built-in clock function and GPS function, and stores the photographic data of the commodity "ice cream" in which the information C related to the following photographed time and location is included. The photographic data related to this commodity "ice cream" is transmitted to the estimation device 2 via the network in a state in which the photographic data includes the information C related to the following photographed time and location.

### (Information C related to Time and Location)

- Time: July 1, 2014 3:30:00 pm
- Location: 35° 0 min aa sec, longitude 135° 45 min bb sec

Next, in the estimation device 2, the photographic data reception unit 21 receives the photographic data of the commodity "ice cream" from the information terminal device 1 of the user U2 via the network. The photographic data of the commodity "ice cream" includes information C related to the photographed time and location.

The context information acquisition unit 22 acquires the following geographical or spatial context information C pertaining to the information C related to the aforementioned time and location included in the photographic data of the commodity "ice cream" received by the photographic data reception unit 21 by referring to the context information database 3 (map database and meteorological database).

### (Context Information C)

- Place Name: Shijo Kawaramachi
- Address: Shincho OO, Shimogyo-ku, Kyoto-shi
- Season: Summer
- Weather: Sunny
- Temperature: 30°C
- Humidity: 50%

The object information acquisition unit 23 acquires the object information C related to the following service/commodity "Ice cream shop [ice cream]" pertaining to the time and location included in the photographic data of the commodity "ice cream" received by the photographic data reception unit 21 by referring to the object information database 4 (store database).

### (Object Information C)

- Ice cream shop [ice cream] (Business Hours Weekdays 11 am - 8 pm, Shincho OO, Shimogyo-ku, Kyoto-shi)

Then, the interest information generation unit 24 correlates the aforementioned context information C acquired by the context information acquisition unit 22 with the aforementioned object information C obtained by the object information acquisition unit 23 and generates the interest information C of the following user U2 in a data format, and then stores it in the interest information database 5.

### (Interest Information C)

- Time: 20140701153000, User U2 ID: 0002, Place name: Shijo Kawaramachi, Address: Shincho OO, Shimogyo-ku, Kyoto-shi, Season: Summer, Weather: sunny, Temperature: 30°C, Humidity: 50%, Commodity: ice cream

### <Generation of Interest Information of Commodity "book">

First, the information terminal device 1 of the user U2 acquires, when a commodity "book" is photographed by its photographing function, the information D related to the following photographed time and location using the built-in clock function and GPS function, and stores the photographic data of the commodity "book" in which the information D related to the following photographed time and location is included. The photographic data related to this commodity "book" is transmitted to the estimation device 2 via the network in a state in which the photographic data includes the information D related to the following photographed time and location.

### (Information D related to Time and Location)

- Time: June 20, 2014 3:30:00 pm
- Location: 35° 0 min cc sec, longitude 135° 45 min CC sec

Next, in the estimation device 2, the photographic data reception unit 21 receives the photographic data of the commodity "book" from the information terminal device 1 of the user U2 via the network. The photographic data of this commodity "book" includes information D related to the aforementioned photographed time and location.

The context information acquisition unit 22 acquires the following geographical or spatial context information D pertaining to the information D related to the aforementioned time and location included in the photographic data of the commodity "book" received by the photographic data reception unit 21 by referring to the context information database 3 (map database and meteorological database).

### (Context Information D)

- Place Name: Shijo Kawaramachi
- Address: Shijo Kawaramachi OO, Shimogyo-ku, Kyoto-shi
- Season: Summer
- Weather: Rain
- Temperature: 25°C
- Humidity: 80%

The object information acquisition unit 23 acquires the object information D related to the following service/commodity "book shop [book]" pertaining to the time and location included in the photographic data of the commodity "book" received by the photographic data reception unit 21 by referring to the object information database 4 (store database).

### (Object Information D)

- Book shop [book] (Business Hours Weekdays 11 am - 9 pm, Shijo Kawaramachi ΔΔ, Shimogyo-ku, Kyoto-shi)

Then, the interest information generation unit 24 correlates the aforementioned context information D acquired by the context information acquisition unit 22 with the aforementioned object information D obtained by the object information acquisition unit 23 and generates the interest information D of the following user U2 in a data format, and then stores it in the interest information database 5.

### (Interest Information D)

- Time: 20140620153000, User U2 ID: 0002, Place name: Shijo Kawaramachi, Address: Shijo-dori Kawaramachi ΔΔ, Shimogyo-ku, Kyoto-shi, Season: Summer, Weather: Sunny, Temperature: 25°C, Humidity: 80%, Commodity: Book

### <Delivery of Specific Information related to Commodity "ice cream">

Next, in the information delivery device 6, the information reception unit 61 receives specific information related to the commodity "ice cream" transmitted from the predetermined server device 7 via the network.

Next, the second context information acquisition unit 62 acquires the following geographical or spatial context information C' from the specific information related to the commodity "ice cream" received by the information reception unit 61.

### (Context Information C')

- Place Name: Shijo Kawaramachi
- Address: Shincho OO, Shimogyo-ku, Kyoto-shi

Further, the second object information acquisition unit 63 acquires the following object information C' related to "ice cream" from the specific information related to the commodity "ice cream" received by the information reception unit 61.

### (Object Information C')

- ice cream

The user selection unit 64 selects the aforementioned user U2 having the interest information C which entirely or partially coincides with the context information C' acquired by the second context information acquisition unit 62 and the object information C' acquired by the second object information acquisition unit 63 by referring to the interest information database.

The information delivery unit 65 delivers the specific information related to the commodity "ice cream" received by the information reception unit 61 to the information terminal device 1 of the user U2 selected by the user selection unit 64 via the network. At this time, it is preferable that the information delivery unit 65 deliver the specific information in a state in which the interest information C of the user U2 referred to when the user selection unit 64 selects the user U2 is associated.

### <Delivery of Specific Information related to Commodity "book">

Next, in the information delivery device 6, the information reception unit 61 receives specific information related to the commodity "book" transmitted from the predetermined server device 7 via the network.

Next, the second context information acquisition unit 62 acquires the following geographical or spatial context information D' from the specific information related to the commodity "book" received by the information reception unit 61.

### (Context Information D')

- Place Name: Shijo Kawaramachi
- Address: Shijo Kawaramachi OO, Shimogyo-ku, Kyoto-shi

Further, the second object information acquisition unit 63 acquires the following object information D' related to a commodity from the specific information related to the commodity "book" received by the information reception unit 61.

### (Object information D')

- Book

The user selection unit 64 selects the aforementioned user U2 having the interest information D which entirely or partially coincides with the context information D' acquired by the second context information acquisition unit 62 and the object information D' acquired by the second object information acquisition unit 63 by referring to the interest information database.

The information delivery unit 65 delivers the specific information related to the commodity "book" received by the information reception unit 61 to the information terminal device 1 of the user U2 selected by the user selection unit 64 via the network. At this time, it is preferable that the information delivery unit 65 deliver the specific information in a state in which the interest information D of the user U2 referred to when the user selection unit 64 selects the user U2 is associated.

In this example, the information terminal device 1 of the user U displays all of the plural pieces of specific information delivered from the information terminal device 1. However, certain specific information may be preferentially displayed among plural pieces of the specific information.

For example, as shown in Fig. 7, the third context information acquisition unit 8 8 acquires geographical or spatial context information pertaining to the current time and location in the information terminal device 1 of the user U by referring to the context information database 3. Then, when the specific information transmitted from the information delivery device 6 are two commodities "ice cream" and "book" and the context information acquired by the third context information acquisition unit 8 is "Shijo Kawaramachi, Weather: Sunny, Humidity: 50%", the information terminal device 1 of the user U preferentially displays the specific information related to the commodity "ice cream" associated with the interest information C of the user U2 which partly coincides with the context information. On the other hand, when the context information is "Shijo Kawaramachi, Weather: Rain, Humidity: 80%", the information terminal device 1 of the user U1 preferentially displays the specific information related to the commodity "book" in which the related information D of the user U2 which partially coincides with the context information is associated.

### [Example 3]

In this example, based on the photographic data of service "Restaurant" photographed by the information terminal device 1 of the user U3, it is estimated that the user U3 has strong interest in services "Restaurant", and the specific information related to service "Restaurant" is delivered to the information terminal device 1 of the user U3. Hereinafter, the detail description will be made.

### <Generation of Interest Information of Service "Restaurant X">

First, the information terminal device 1 of the user U3 acquires, when the exterior view, the interior view, the dishes of the service of "Restaurant X" are photographed by its photographing function, the information E related to the following photographed time and location using the built-in clock function and GPS function, and stores the photographic data of the service "Restaurant X" in which the information E is related to the following photographed time and location is included. The photographic data related to this service "Restaurant X" is transmitted to the estimation device 2 via the network in a state in which the photographic data includes the information E related to the following photographed time and location.

### (Information E related to Time and Location)

- Time: February 1, 2015 3:30:00 pm
- Location: 35° 0 min xx sec, longitude 135° 45 min yy sec

Next, in the estimation device 2, the photographic data reception unit 21 receives the photographic data of the service "Restaurant X" from the information terminal device 1 of the user U3 via the network. The photographic data of this service "Restaurant X" includes information E related to the aforementioned photographed time and location.

The context information acquisition unit 22 acquires the following geographical or spatial context information E pertaining to the information E related to the aforementioned time and location included in the photographic data of the service "Restaurant X" received by the photographic data reception unit 21 by referring to the context information database 3 (map database and meteorological database).

### (Context Information E)

- Place Name: Shijo Karasuma
- Address: Shijo-dori Karasuma OO, Shimogyo-ku, Kyoto-shi
- Season: Winter
- Weather: Snow
- Temperature: 0°C
- Humidity: 30%

The object information acquisition unit 23 acquires object information E related to the following service "Restaurant X" pertaining to the time and location included in the photographic data of the service "Restaurant X" received by the photographic data reception unit 21 by referring to the object information database 4 (store database).

### (Object Information E)

- Restaurant X (Business hours Saturdays and Sundays from 9 am - 11 pm, Shijo-dori Karasuma OO, Shimogyou-ku, Kyoto-shi)

Then, the interest information generation unit 24 correlates the aforementioned context information E acquired by the context information acquisition unit 22 with the aforementioned object information E obtained by the object information acquisition unit 23 and generates the interest information E of the following user U3 in a data format, and then stores it in the interest information database 5. At this time, when the user U3 photographs the exterior view, the interior view, the dishes of the service "Restaurant X" even one minute and two minutes later, eventually the interest information E of the user U3 concerning the service "Restaurant X" is generated.

### (Interest Information E)

- Time: 20150201153000, User U3 ID: 0003, Place Name: Shijo Karasuma, Address: Shijo-dori OO, Shimogyo-ku, Kyoto-shi, Season: Winter, Weather: Snow, Temperature: 0°C, Humidity: 30%, Service: Restaurant
- Time: 20150201153100, User U3 ID: 0003, Place name: Shijo Kawaramachi, Address: Shijo-dori Kawaramachi OO, Shimogyo-ku, Kyoto-shi, Season: Winter, Weather: Snow, Temperature: OC, Humidity: 30%, Service: Restaurant
- Time: 20150201153200, User U3 ID: 0003, Place name: Shijo Kawaramachi, Address: Shijo-dori Kawaramachi OO, Shimogyo-ku, Kyoto-shi, Season: Winter, Weather: Sow, Temperature: 0°C, Humidity: 30%, Service: Restaurant

### <Generation of Interest Information of Service "Restaurant X">

First, the information terminal device 1 of the user U3 acquires, when the exterior view, interior view, dishes of the service "Restaurant Y" are photographed its photographing function, the information F related to the following photographed time and location using the built-in clock function and GPS function, and stores the photographic data of the service "Restaurant Y" in which the information F is related to the following photographed time and location. The photographic data related to this service "Restaurant Y" is transmitted to the estimation device 2 via the network in a state in which the photographic data includes the information F related to the following photographed time and location.

### (Information F related to Time and Location)

- Time: December 1, 2014 3:30:00 pm
- Location: 35° 0 min cc sec, longitude 135° 45 min dd sec

Next, in the estimation device 2, the photographic data reception unit 21 receives the photographic data of the service "Restaurant Y" from the information terminal device 1 of the user U3 via the network. The photographic data of this service "Restaurant Y" includes information F related to the aforementioned photographed time and location.

The context information acquisition unit 22 acquires the following geographical or spatial context information F pertaining to the aforementioned time and location included in the photographic data of the service "Restaurant Y" received by the photographic data reception unit 21 by referring to the context information database 3 (map database and meteorological database).

### (Context Information F)

- Place Name: Shijo Kawaramachi
- Address: Shijo-dori Kawaramachi ΔΔ, Shimogyo-ku, Kyoto-shi
- Season: Winter
- Weather: Sunny
- Temperature: 10°C
- Humidity: 30%

The object information acquisition unit 23 acquires object information F related to the following service "Restaurant Y" pertaining to the time and location included in the photographic data of the service "Restaurant Y" received by the photographic data reception unit 21 by referring to the object information database 4 (store database).

### (Object Information F)

- Restaurant Y (Business Hours Saturday and Sunday 11 am - 11 pm Shijo-dori Kawaramachi ΔΔ, Shimogyo-ku, Kyoto-shi)

Then, the interest information generation unit 24 correlates the aforementioned context information F acquired by the context information acquisition unit 22 with the aforementioned object information F obtained by the object information acquisition unit 23 and generates the interest information F of the following user U3 in a data format, and then stores it in the interest information database 5.

### (Interest Information F)

- Time: 20141201153000, User U3 ID: 0003, Place name: Shijo Kawaramachi, Address: Shijo-dori Kawaramachi ΔΔ, Shimogyo-ku, Kyoto-shi, Season: Winter, Weather: Sunny, Temperature: 10°C, Humidity: 30%, Service: Restaurant

### < Delivery of Specific Information related to Service "Restaurant (Shijo Karasuma)">

Next, in the information delivery device 6, the information reception unit 61 receives specific information related to the service "Restaurant (Shijo Karasuma)" transmitted from the predetermined server device 7 via the network.

Next, the second context information acquisition unit 62 acquires the following geographical or spatial context information E' from the specific information related to the service "Restaurant (Shijo Karasuma)" received by the information reception unit 61.

### (Context Information E')

- Place Name: Shijo Karasuma
- Address: Shijo-dori Karasuma OO, Shimogyo-ku, Kyoto-shi

The second object information acquisition unit 63 acquires the following object information E' related to the service "Restaurant" from the specific information related to the service "Restaurant (Shijo Karasuma)" received by the information reception unit 61.

### (Object Information E')

- Restaurant

The user selection unit 64 selects the aforementioned user U3 having the interest information E which entirely or partially coincides with the context information E' acquired by the second context information acquisition unit 62 and the object information E' acquired by the second object information acquisition unit 63 by referring to the interest information database.

The information delivery unit 65 delivers the specific information related to the service "Restaurant (Shijo Karasuma)" received by the information reception unit 61 to the information terminal device 1 of the user U3 selected by the user selection unit 64 via the network. At this time, it is preferable that the information delivery unit 65 deliver the specific information in a state in which the interest information E of the user U3 referred to when the user selection unit 64 selects the user U3 is associated.

### < Delivery of Specific Information related to Service "Restaurant (Shijo Kawaramachi)">

Next, in the information delivery device 6, the information reception unit 61 receives specific information related to the service "Restaurant (Shijo Kawaramachi)" transmitted from the predetermined server device 7 via the network.

Next, the second context information acquisition unit 62 acquires the following geographical or spatial context information F' from the specific information related to the service "Restaurant (Shijo Kawaramachi)" received by the information reception unit 61.

### (Context Information F')

- Place Name: Shijo Kararamachi
- Address: Shijo-dori Kawaramachi ΔΔ, Shimogyo-ku, Kyoto-shi

The second object information acquisition unit 63 acquires the following object information F' related to the service "Restaurant" from the specific information related to the service "Restaurant (Shijo Kawaramachi)" received by the information reception unit 61.

### (Object information F')

- Restaurant

The user selection unit 64 selects the aforementioned user U3 having the interest information F which entirely or partially coincides with the context information F' acquired by the second context information acquisition unit 62 and the object information F' acquired by the second object information acquisition unit 63 by referring to the interest information database.

The information delivery unit 65 delivers the specific information related to the service "Restaurant (Shijo Kawaramachi)" received by the information reception unit 61 to the information terminal device 1 of the user U3 selected by the user selection unit 64 via the network. At this time, it is preferable that the information delivery unit 65 deliver the specific information in a state in which the interest information F of the user U3 referred to when the user selection unit 64 selects the user U3 is associated.

In this example, the information terminal device 1 of the user U displays all of the plural pieces of specific information delivered from the information terminal device 1. However, certain specific information may be preferentially displayed among plural pieces of the specific information.

For example, as shown in Fig. 7, the third context information acquisition unit 8 acquires geographical or spatial context information pertaining to the current time and location in the information terminal device 1 of the user U by referring to the context information database 3. Then, when the specific information transmitted from the information delivery device 6 are two services "Restaurant (Shijo Karasuma)" and "Restaurant (Shijo Kawaramachi)" and the context information acquired by the third context information acquisition unit 8 is "Shijo Karasuma, Season: Winter, Weather: Snow, Temperature: 0°C", the information terminal device 1 of the user U preferentially displays the specific information related to the service "Restaurant (Shijo Karasuma)" associated with the interest information E of the user U3 which partly coincides with the context information. On the other hand, when the context information is "Shijo Karasuma, Season: Winter, Weather: Sunny, Temperature: 10°C", the information terminal device 1 of the user U3 preferentially displays the specific information related to the service "Restaurant (Shijo Kawaramachi)" with which the related information F of the user U3 which partially coincides with the context information is associated.

Alternatively, when there are plural pieces of specific information transmitted from the information delivery device 6, the information terminal device 1 of the user U3 may preferentially display specific information associated with more interest information of the user U3. For example, in the case of the specific information related to the service "Restaurant (Shijo Karasuma)" associated with more interest information E of the user U3 and the specific information related to the "Restaurant (Shijo Kawaramachi)" related to the interest information F of the user U3, the interest information E of the user U3 has more interest information than the interest information F of the user U3. Therefore, the specific information related to the service "Restaurant (Shijo Karasuma)" to which the interest information E is associated is preferentially displayed.

Although the embodiment of the present invention was described with reference to the drawings, the present invention is not limited to the embodiment shown in the drawings. Various modifications and variations can be made to the illustrated embodiments within the same scope as or within the equivalent scope of the present invention.

### Description of Reference Symbols

- 1:: information terminal device of user U
- 2:: estimation device
- 3 :: context information database
- 4:: object information database
- 5:: interest information database
- 6:: information delivery device
- 7:: server device

## Claims

1. A user interest estimation system that estimates user's interest based on photographic data of a commodity or service photographed by an information terminal device of a user, comprising:
an estimation device configured to estimate the user's interest;
a context information database connected to the estimation device in a communicable state and configured to store geographical or spatial context information associated with a time and/or location;
an object information database connected to the estimation device in a communicable state and configured to store object information related to a commodity or service associated with a time and/or location; and
an interest information database connected to the estimation device in a communicable state and configured to store interest information of the user,
wherein the estimation device includes
a photographic data reception unit configured to receive photographic data related to a commodity or service transmitted from the information terminal device of the user via a network,
a context information acquisition unit configured to acquire geographical or spatial context information pertaining to a time and/or location included in the photographic data received by the photographic data reception unit by referring to the context information database,
an object information acquisition unit configured to acquire object information related to a commodity or service pertaining to a time and/or location included in the photographic data received by the photographic data reception unit by referring to the object information database, and
an interest information generation unit configured to generate the interest information of the user by correlating the context information acquired by the context information acquisition unit with the object information acquired by the object information acquisition unit.

2. The user interest estimation system as recited in claim 1,
wherein the context information database comprises a plurality of databases including at least one of a map database, a meteorological database, and a traffic database.

3. The user interest estimation system as recited in claim 1,
wherein the object information database comprises a plurality of databases including at least one of an event database, a news database, a store database, and a facility database.

4. The user interest estimation system as recited in claim 1,
wherein the interest information generation unit makes photographic data received by the photographic data reception unit include interest information in association with the context information and the object information.

5. The user interest estimation system as recited in claim 1, further comprising a person image judgment unit configured to judge whether or not the photographic data photographed by the information terminal device of the user mainly include person related images,
wherein the context information acquisition unit and the object information acquisition unit do not acquire the context information and the object information when it is determined by the person image judgment unit that the photographic data mainly include the person related images.

6. An information delivery system equipped with an interest information database in the user interest estimation system as recited in any one of claims 1 to 5 and an information delivery device connected to the interest information database in a communicable state,
wherein the information delivery device includes
an information reception unit configured to receive specific information such as advertisements from a predetermined server device,
a second context information acquisition unit configured to acquire geographical or spatial context information from the specific information received by the information reception unit,
a second object information acquisition unit configured to acquire object information related to a commodity or service from the specific information received by the information reception unit,
a user selection unit configured to select a user having interest information which entirely or partially coincides with the context information acquired by the second context information acquisition unit and the object information acquired by the second object information acquisition unit by referring to the interest information database, and
an information delivery unit configured to deliver specific information received by the information reception unit to the information terminal device of the user selected by the user selection unit.

7. The information delivery system as recited in claim 6,
wherein the information delivery unit delivers specific information in a state in which interest information of the user referred to when the user selection unit selects the user is associated.

8. The information delivery system as recited in claim 7, further comprising a third context information acquisition unit connected to the information terminal device of the user in a communicable state via a network,
wherein the third context information acquisition unit acquires geographical or spatial context information pertaining to a current time and location in the information terminal device of the user by referring to the context information database, and
wherein the information terminal device of the user preferentially displays specific information in which the interest information of the user is entirely or partially associated with the context information acquired by the third context information acquisition unit when there are plural pieces of specific information transmitted from the information delivery device.

9. The information delivery system as recited in claim 7,
wherein, when there are plural pieces of specific information transmitted from the information delivery device, the information terminal device of the user preferentially displays specific information associated with more interest information of the user.
